# EUROPÄISCHE PATENTSCHRIFT

(11) **EP 2 834 528 B1**
(45) Veröffentlichungstag und Bekanntmachung des Hinweises auf die Patenterteilung: **16.10.2019**
(21) Anmeldenummer: 13714266.7
(22) Anmeldetag: 02.04.2013
(51) Int. Cl.: F16B 5/04, F16B 19/08, B21J 15/02, B21J 15/14, B21J 15/36, B29C 65/56, B29C 65/64, B29C 65/74

(54) **STANZNIET MIT EINEM VORGELOCHTEN FLÄCHIGEN ELEMENT, HERSTELLUNGSVERFAHREN SOWIE FÜGEVERFAHREN DAFÜR**
SELF-PIERCING RIVET WITH A PRE-PERFORATED FLAT ELEMENT, PRODUCTION METHOD AND JOINING METHOD THEREFOR
RIVET AUTOPOINÇONNEUR POURVU D'UN ÉLÉMENT PLAT PRÉPERFORÉ, PROCÉDÉ DE FABRICATION AINSI QUE PROCÉDÉ D'ASSEMBLAGE

(30) Priorität: 02.04.2012 DE 102012102860
(43) Veröffentlichungstag der Anmeldung: 11.02.2015
(73) Patentinhaber: Böllhoff Verbindungstechnik GmbH, 33649 Bielefeld (DE)
(72) Erfinder: MARXKORS, Andreas, 33161 Hövelhof (DE); HEGER, Mathias, 33813 Oerlinghausen (DE)
(74) Vertreter: Heyer, Volker
(86) Internationale Anmeldenummer: PCT/EP2013/056928
(87) Internationale Veröffentlichungsnummer: WO 2013/150022

(56) Entgegenhaltungen:
- WO-A1-2012/117737
- JP-A- 2006 234 154
- US-A- 3 432 925
- US-A- 3 919 916
- US-A1- 2010 088 880

## Beschreibung

### 1. Gebiet der Erfindung

Die vorliegende Erfindung betrifft einen Stanzniet, insbesondere einen selbstlochenden Stanzniet, ein Verfahren zu seiner Herstellung sowie ein Fügeverfahren für diesen Stanzniet.

### 2. Hintergrund der Erfindung

Auf dem Gebiet der Fügeverbindungen ist die Nutzung von Stanznieten, im Speziellen von Halbhohlstanznieten, weit verbreitet. Dabei wird ein Stanzniet in mindestens zwei übereinander angeordnete Bauteile gesetzt. Die beiden Bauteile stützen sich dabei an einer der Fügestelle gegenüberliegend angeordneten Matrize ab, die während des Setzvorgangs in Zusammenwirkung mit den zu verbindenden Bauteilen und dem Stanzniet einen Schließkopf der Fügeverbindung ausbildet.

Beispielsweise in der Automobilindustrie werden zunehmend Bauteile bestehend aus unterschiedlichem Material miteinander verbunden. Während das Strukturbauteil aus Metall besteht, nutzt die darüber liegende Decklage ein weiches Metall, wie beispielsweise Aluminium, oder einen Kunststoff als Material. Die verwendeten Kunststoffe besitzen genauso wie das darunter liegende Strukturbauteil ein breites Spektrum. Diese Kunststoffe sind nicht verstärkt oder weisen Fasern oder Gewebelagen eingebracht in eine Kunststoff Matrix zu ihrer Verstärkung auf.

Basierend auf dem unterschiedlichen Verformungsverhalten von Werkstoffen unterschiedlicher Eigenschaften in der Decklage und im Strukturbauteil, wie beispielsweise Kunststoff in der Decklage und Metall im Strukturbauteil, ergeben sich Nachteile beim Herstellen einer Stanznietverbindung zwischen einer derartigen Decklage und dem Strukturbauteil. Dies ist im Speziellen auf das unterschiedliche Verformungsverhalten der beiden Werkstoffe zurückzuführen. Da der Kunststoff beim Eindringen des Stanzniets derart verformt wird, dass sich die verstärkenden Fasern von der Kunststoffmatrix ablösen oder sich in der hergestellten Verbindung Spalte ausbilden zwischen der Decklage und dem Strukturbauteil, gewährleisten die bekannten Fügeverbindungen nicht die Qualitätsanforderungen beispielsweise in der Automobilbranche. Die oben genannten Nachteile wirken sich neben der Reduktion der Festigkeit der Herstell- und Fügeverbindung auch negativ auf die Lebensdauer der hergestellten Fügeverbindung aus.

Ein Niet mit einem Kopf und einem Schaft ist in JP 2006234154 A beschrieben. Der Niet ist in der fertigen Verbindung mit einer Unterlegscheibe verbunden.

Ein weiterer Niet ist in US 3,919,916 beschrieben. Der Niet weist eine Bohrung auf, um ein Antriebsmittel aufzunehmen. Eine Unterlegscheibe ist nahe der Bodenwand der Bohrung vorhanden, um eine radiale Ausdehnung des Schafts vor dem Durchdringen der zu verbindenden Werkstücke zu verhindern.

Eine Matrize zum Herstellen einer Stanznietverbindung sowie ein Setzgerät sind in US 2010/0088880 A1 beschrieben. Die Matrize weist einen Hohlraum auf sowie ein bewegbares Stützelement, das den Hohlraum der Matrize ausfüllt und bewegbar ist.

Es ist daher die Aufgabe vorliegender Erfindung, einen Stanzniet zum Herstellen einer Fügeverbindung mit verbesserten Eigenschaften im Vergleich zum Stand der Technik bereitzustellen. Des Weiteren stellt sich vorliegende Erfindung die Aufgabe, ein Herstellungsverfahren und ein Fügeverfahren für einen derartigen Stanzniet zu liefern.

### 3. Zusammenfassung der Erfindung

Die oben genannten Probleme werden durch einen Stanzniet gemäß Anspruch 1, ein Herstellungsverfahren für diesen Stanzniet gemäß Anspruch 6, ein Fügeverfahren für einen derartigen Stanzniet gemäß Anspruch 9 sowie durch eine Bauteilverbindung mit einem derartigen Stanzniet gemäß Anspruch 13 gelöst. Weitere Ausgestaltungen, Modifikationen und Vorteile vorliegender Erfindung gehen aus der folgenden Beschreibung, den begleitenden Zeichnungen und den anhängenden Ansprüchen hervor.

Der erfindungsgemäße Stanzniet, insbesondere ein selbstlochender Stanzniet, weist die Merkmale von Anspruch 1 auf, unter anderem: einen Kopf und einen Schaft sowie ein vorgelochtes flächiges Element, das auf dem Schaft angeordnet ist und sich radial bezogen auf den Kopf zumindest teilweise über einen Kopfradius hinaus erstreckt.

Der erfindungsgemäße Stanzniet stellt eine Kombination aus einem Stanzniet bekannter Bauart und einem auf dessen Schaft, vorzugsweise befestigten, vorgelochten flächigen Stützelement dar. Dieses vorgelochte flächige Element oder Stützelement dient dazu, mithilfe eines Werkzeugs, beispielsweise eines Niederhalters, eine Stütz- und Kompressionswirkung innerhalb des Bereichs der Fügeverbindung zu erzielen, sodass die Herstellung der Fügeverbindung zwischen der Decklage, beispielsweise einem Kunststoffbauteil, und dem Strukturbauteil, beispielsweise aus Metall, unterstützt wird. Da sich das Stützelement in radialer Richtung über den Kopfradius des Kopfes des Stanzniets hinaus erstreckt, wird eine Druckkraft eines Niederhalters nicht nur in einem radialen Ringbereich unterhalb der Angriffsfläche des Niederhalters sondern auch unterhalb der Angriffsfläche des vorgelochten flächigen Elements auf der Decklage eine Kompressionswirkung erzielen. Diese Kompressionswirkung trägt dazu bei, dass trotz eines unterschiedlichen Materialverhaltens von Decklage und Strukturbauteil eine zufriedenstellende Fügeverbindung aus beispielsweise mindestens einer Kunststoffdecklage und einem Strukturbauteil aus Metall herstellbar ist. Zu diesem Zweck ist das vorgelochte flächige Stützelement fest oder bewegbar auf dem Schaft angeordnet. Es ist ebenfalls bevorzugt, die zunächst feste Verbindung zwischen Schaft und vorgelochtem flächige Stützelement im Rahmen des Fügeverfahrens zu lösen, sodass das vorgelochte flächige Stützelement verschiebbar auf dem Schaft neu positionierbar ist.

Gemäß einer bevorzugten Ausführungsform vorliegender Erfindung ist das vorgelochte flächige Element auf dem Schaft des Stanzniets zwischen dem Kopf und einem kopfabgewandten Ende des Schafts unverlierbar, vorzugsweise fest oder locker, angeordnet. Mithilfe dieser Konstruktion ist gewährleistet, dass die Kombination aus Stanzniet und vorgelochtem flächigem Element wie ein gewöhnlicher Stanzniet einem Setzgerät zuführbar ist. Es sind daher keine zusätzlichen Zuführ- oder Positionierschritte für das vorgelochte flächige Element auf den zu fügenden Bauteilen erforderlich. Des Weiteren lässt sich der erfindungsgemäß bevorzugte Stanzniet auf dieser Grundlage als Schüttgut transportieren, ohne dass am späteren Verarbeitungsort zusätzliche Installationsarbeiten von Stanzniet und vorgelochtem flächigen Element erforderlich sind.

Erfindungsgemäß bevorzugt realisiert das vorgelochte flächige Element eine Stütz- und Kompressionsfunktion unterhalb des Kopfes und angrenzend an den Schaft des Stanzniets, was bekannte Niederhalterkonstruktionen aufgrund ihres Angriffs radial außerhalb des Kopfradiuses nicht leisten können. In Abhängigkeit davon, welcher Platz für die herzustellende Fügeverbindung zur Verfügung steht oder mit welcher Niederhalterkonstruktion eine Druckkraft auf den Fügebereich aufgebracht werden soll, besitzt das vorgelochte flächige Element vorzugsweise unterschiedliche Formen. Gemäß einer Ausführungsform ist das vorgelochte flächige Element eine runde Scheibe mit einer zentralen Öffnung, in der der Schaft des Stanzniets angeordnet ist. Es ist weiterhin bevorzugt, das vorgelochte flächige Element in einer langgestreckten Form mit einer mittigen Öffnung für den Schaft des Stanzniets vorzusehen, sodass sich diametral gegenüberliegend laschenähnliche Fortsätze über den Kopfradius hinaus erstrecken, an denen ein klassischer Niederhalten angreifen kann. In diesem Zusammenhang ist es ebenfalls bevorzugt, das sich nur an einer Stelle bezogen auf den Umfang des Kopfes des Stanzniets das vorgelochte flächige Element über den Kopfradius hinaus erstreckt, um dort eine Angriffsfläche für den Niederhalter zu bilden. Bei ausreichender Stabilität des vorgelochten flächigen Elements wäre auch bei dieser Konstruktionsalternative eine ausreichende Übertragung von Druckkräften in dem Bereich unterhalb des Kopfes des Stanzniets und angrenzend an den Schaft des Stanzniets gewährleistet.

Gemäß einer weiteren bevorzugten Ausgestaltung vorliegender Erfindung ist das vorgelochte flächige Element angrenzend an das kopfabgewandte Ende des Schafts an dem Schaft befestigt, beispielsweise mithilfe einer Reibschlussverbindung oder einer formschlüssigen Verbindung. Es ist des Weiteren bevorzugt, dass das kopfabgewandte Ende des Schafts weniger als 2/10 einer Gesamtlänge des Schafts von einer ihm zugewandten Seite des vorgelochten flächigen Elements absteht.

Die bevorzugte Befestigung des vorgelochten flächigen Elements auf dem Schaft des Stanzniets unterstützt die bereits oben angesprochene einfache Verarbeitbarkeit des Stanzniets mit vorgelochtem flächigem Element. Zudem lässt sich das vorgelochte flächige Element genauer positionieren, sofern das vorgelochte flächige Element an dem Schaft des Stanzniets befestigt ist. Eine derartige Befestigung ist als kraftschlüssige oder formschlüssige Verbindung realisierbar. Eine kraftschlüssige Verbindung oder Reibschlussverbindung zwischen der Außenseite des Schafts des Stanzniets und der Innenseite einer Öffnung des vorgelochten flächigen Elements lässt sich auf unterschiedliche Weise herstellen. So besteht eine Ausführungsform darin, die Öffnung im vorgelochten flächigen Element mit einem Untermaß bezogen auf den Außenradius des Schafts des Stanzniets auszubilden. Gemäß einer weiteren Alternative wird nach Aufstecken des vorgelochten flächigen Elements auf den Schaft des Stanzniets der Schaft aufgeweitet, beispielsweise aufgestemmt oder gestaucht, sodass sich eine Reibschlussverbindung zwischen Schaft des Stanzniets und dem vorgelochten flächigen Element ausbildet. Da sich der Schaft durch das Aufweiten verdickt, ist es ebenfalls bevorzugt, das vorgelochte flächige Element formschlüssig zwischen Verdickung des Schafts und Kopf des Stanzniets bewegbar zu halten.

Es ist weiterhin bevorzugt, einen Endradius des kopfabgewandten Endes des Schafts größer als einen Schaftradius des Schafts zwischen dem Kopf und dem kopfabgewandten Ende des Schafts des Stanzniets auszubilden. Basierend auf dieser Formgebung wird ebenfalls die Stabilität der herzustellenden Fügeverbindung verbessert, da sich vorzugsweise ein Hinterschnitt gesehen in Längsrichtung des Schafts des Stanzniets in der Fügeverbindung ausbildet. Dieser Hinterschnitt sorgt für eine höhere Festigkeit zwischen dem Stanzniet, der Decklage und dem darunter liegenden Strukturbauteil.

Vorliegende Erfindung offenbart zudem ein Herstellungsverfahren für einen Stanzniet, insbesondere einen Stanzniet, das die folgenden Schritte aufweist: Bereistellen eines Stanzniets und eines vorgelochten flächigen Elements und Anordnen, unverlierbar, des vorgelochten flächigen Elements auf einem Schaft des Stanzniets derart, dass sich das vorgelochte flächige Element bezogen auf einen Kopf des Stanzniets radial zumindest teilweise über einen Kopfradius hinaus erstreckt. In weiterer bevorzugter Ausgestaltung vorliegenden Herstellungsverfahrens besitzt das vorgelochte flächige Element die Form einer runden oder polygonalen Scheibe mit einer zentralen Öffnung. Diese runde Scheibe oder ein anders geformtes vorgelochtes flächiges Element wird auf dem Schaft des Stanzniets befestigt, in dem der Schaft des Stanzniets aufgeweitet wird. Auf diese Weise bildet sich eine Reibschlussverbindung zwischen der Innenseite der Öffnung des vorgelochten flächigen Elements und der Außenseite des Schafts des Stanzniets aus. Es ist ebenfalls bevorzugt, die Öffnung des vorgelochten flächigen Elements mit einem Untermaß bezogen auf den Durchmesser des Schafts des Stanzniets auszubilden, um auf diese Weise eine Reibschlussverbindung zwischen dem vorgelochten flächigen Element und dem Schaft des Stanzniets herstellen zu können, wenn das vorgelochte flächige Element auf den Schaft gedrückt wird.

Vorliegende Erfindung offenbart zudem ein Fügeverfahren für einen Stanzniet, insbesondere einen Stanzniet mit einem vorgelochten flächigen Element, das sich radial bezogen auf einen Kopf des Stanzniets zumindest teilweise über einen Kopfradius hinaus erstreckt und auf einem Schaft zwischen dem Kopf und einem kopfabgewandten Ende des Schaftes unverlierbar angeordnet ist. Das Fügeverfahren weist die folgenden Schritte auf: Anordnen mindestens eines ersten Bauteils über einem zweiten Bauteil, Zuführen des Stanzniets mit vorgelochtem flächigem Element unverlierbar angeordnet auf dem Schaft des Stanzniets zu einer Fügestelle, Andrücken des vorgelochten flächigen Elements an das erste Bauteil mithilfe eines Werkzeugs, insbesondere ein Niederhalter, wobei eine dem vorgelochten flächigen Element gegenüberliegend angeordnete Matrize eine ausreichende oder eine veränderbare Gegenkraft aufbringt, und Setzen des Stanzniets mithilfe eines Setzwerkzeugs in das mindestens erste und zweite Bauteil, wobei das vorgelochte flächige Element den Schaft des Stanzniets umgibt

Das erfindungsgemäß bevorzugte Fügeverfahren wird gemäß einer weiteren Alternative in Kombination mit einer Matrize mit einem bewegbaren Stützelement durchgeführt. Daraus ergeben sich die weiteren Schritte: Stützen der zu verbindenden Bauteile innerhalb eines Hohlraums der Matrize während des Fügevorgangs und Bewegen des Stützelements zumindest teilweise aus dem Hohlraum der Matrize heraus während des Fügevorgangs, um den Hohlraum der Matrize gezielt für verdrängtes Material der zu verbindenden Bauteile freizugeben.

Mithilfe der Matrizen mit einem bewegbaren Stützelement wird dem in den Hohlraum der Matrize drängenden Material eine Gegenkraft entgegengesetzt, die das Setzen des Stanzniets in die zu verbindenden Bauteile beeinflusst. Die durch das bewegbare Stützelement aufgebrachte Gegenkraft wird vorzugsweise gesteuert oder geregelt, um Eigenschaften unterschiedlicher Materialien der zu verbindenden Bauteile zu berücksichtigen.

Das erfindungsgemäße Fügeverfahren basiert auf der abgestimmten Konstruktion von Stanzniet und vorgelochtem flächigem Element. Da sich das vorgelochte flächige Element in radialer Richtung über den Kopfradius des Kopfes des Stanzniets hinaus erstreckt, kann eine Niederhalterkraft auch in den Bereich unterhalb des Kopfes des Stanzniets vor und während des Herstellens der Fügeverbindung übertragen werden. Auf diese Weise wird gerade das Fügen von Bauteilen unterschiedlicher Materialeigenschaften, wie beispielsweise Decklage aus Kunststoff und einem Strukturbauteil aus Metall, unterstützt.

Entsprechend umfasst die vorliegende Erfindung auch ein erstes und ein zweites Bauteil, die mit einem Stanzniet gemäß oben beschriebener Konstruktion miteinander verbunden sind.

### 4. Kurze Beschreibung der begleitenden Zeichnungen

Die vorliegende Erfindung wird unter Bezugnahme der begleitenden Zeichnungen näher erläutert. Es zeigen:
- Figur 1: eine bevorzugte Ausführungsform einer Seitenansicht des Stanzniets mit vorgelochtem flächigem Element,
- Figur 2: eine seitliche Ansicht des gefügten Stanzniets aus Fig. 1,
- Figur 3: eine bevorzugte Ausführungsform des vorgelochten flächigen Elements,
- Figur 4: eine weitere bevorzugte Ausführungsform des vorgelochten flächigen Elements,
- Figur 5a-d: Schnittansichten entlang der Linie 5-5 aus Fig. 4,
- Figur 6I-V: eine bevorzugte sequenzielle Darstellung einzelner Schritte beim Fügen des Stanzniets mit vorgelochtem flächigem Element,
- Figur 7I'-V': eine weitere bevorzugte sequenzielle Darstellung des Fügens eines Stanzniets mit vorgelochtem flächigem Element,
- Figur 8: ein Flussdiagramm einer bevorzugten Ausführungsform der Herstellung des Stanzniets mit vorgelochtem flächigem Element,

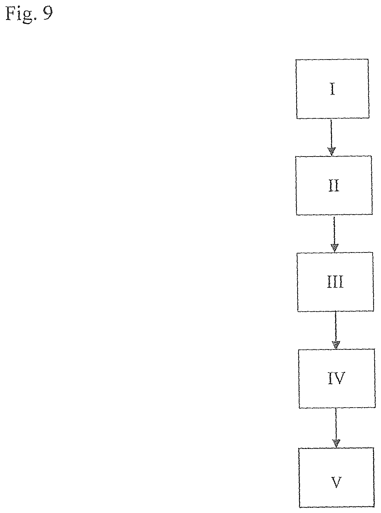

- Figur 9: ein Flussdiagramm einer bevorzugten Ausführungsform des Fügeverfahrens des Stanzniets mit vorgelochtem flächigem Element und

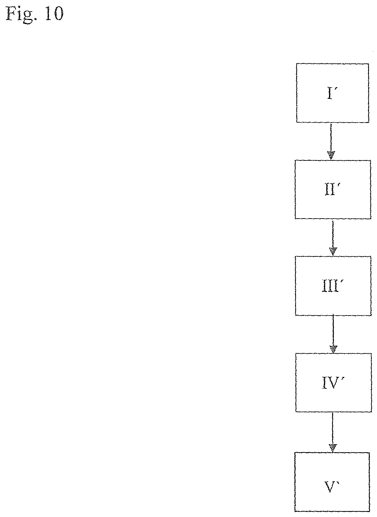

- Figur 10: eine Flussdiagramm einer weiteren bevorzugten Ausführungsform des Fügeverfahrens des Stanzniets mit vorgelochtem flächigem Element und
- Figur 11: eine bevorzugte Veranschaulichung eines Schneidspalts.

### 5. Detaillierte Beschreibung der bevorzugten Ausführungsformen

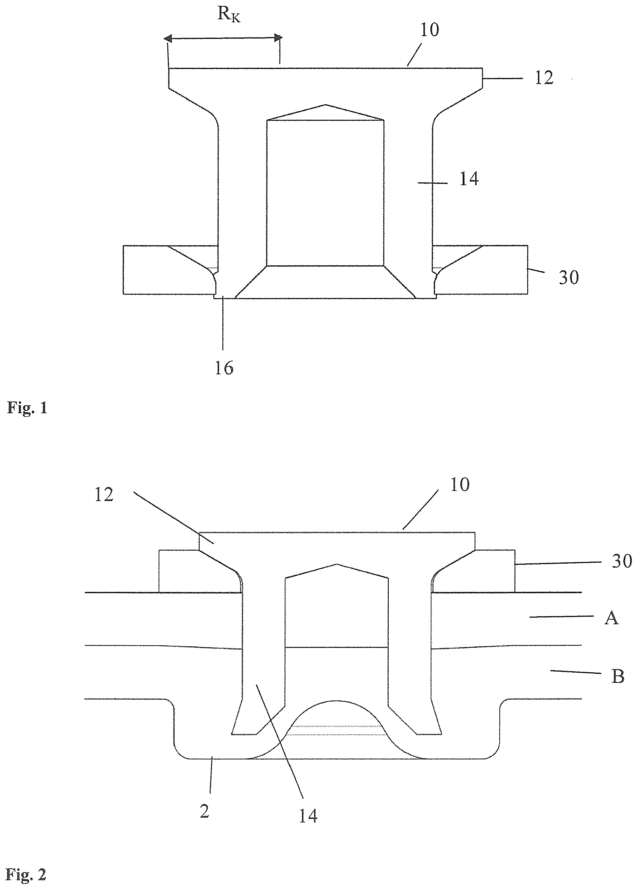

Figur 1 zeigt eine bevorzugte Ausführungsform der Erfindung mit einem Stanzniet 10 und einem vorgelochten flächigen Element 30, das auf einem Schaft 14 des Stanzniets 10 angeordnet ist. Vorzugsweise wird als Stanzniet 10 ein selbstlochender Stanzniet oder ein Halbhohlstanzniet genutzt, sodass im Weiteren Verlauf der Beschreibung ein Halbhohlstanzniet exemplarisch für verschiedene Stanzniet-Typen 10 verstanden wird. Der Halbhohlstanzniet 10 umfasst einen Kopf 12 und den Schaft 14. Im Hinblick auf die Konstruktion des Stanzniets 10 sind bekannte Formen anwendbar. Entsprechend umfasst der Stanzniet 10 beispielsweise einen Flachkopf gemäß Figur 1. Des Weiteren sind ein Senkkopf oder ein Flachrundkopf des Stanzniets (nicht gezeigt) bevorzugt einsetzbar. In weiterer Ausgestaltung des Stanzniets 10 werden an seinem kopfabgewandten Ende 16 des Schafts 14 unterschiedliche Formen von Schneidgeometrien verwendet. Die Schneidgeometrie wird in Abhängigkeit von Materialien der zu verbindenden Bauteile A, B (vgl. Fig. 2) ausgewählt.

Wie in den Figuren 1 und 2 erkennbar ist, ist das vorgelochte flächige Element 30 auf dem Schaft 14 des Stanzniets 10 angeordnet. Das vorgelochte flächige Element 30 erstreckt sich in radialer Richtung bezogen auf den Schaft 14 oder den Kopf 12 über den Kopfradius R_{K} hinaus (vgl. Fig. 1). Aufgrund dieser Ausgestaltung ist gewährleistet, dass während eines Fügevorgangs ein Werkzeug, vorzugsweise ein Niederhalter, an dem vorgelochten flächigen Element 30 angreifen kann. Durch den Angriff des Niederhalters wird die Druckkraft des Niederhalters über das vorgelochte flächige Element 30 in den Bereich unterhalb des Kopfes 12 des Stanzniets geleitet. Auf diese Weise wird der Fügebereich der herzustellenden Fügeverbindung unterhalb des Kopfes 12 des Stanzniet durch den Niederhalter oder das Werkzeug komprimiert und dadurch vorzugsweise ein Aufsteigen der Decklage beim Fügen minimiert.

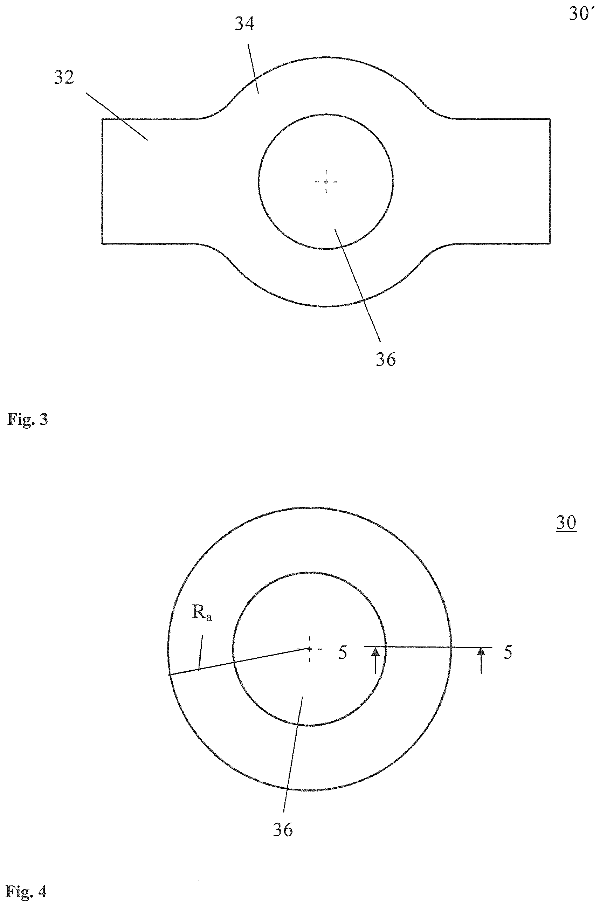

Erfindungsgemäß bevorzugt weist das vorgelochte flächige Element 30 unterschiedliche Formen auf. Für die Formgebung des vorgelochten flächigen Elements 30 ist wesentlich, dass es eine Öffnung 36 und zumindest teilweise eine radiale Erstreckung aufweist, die über den Kopfradius R_{K} hinausgeht. Unterschiedliche bevorzugte Ausführungsformen des vorgelochten flächigen Elements 30 sind in den Figuren 3 und 4 gezeigt. Figur 3 zeigt das vorgelochte flächige Element 30' mit zwei sich diametral gegenüberliegenden Laschen 32. Aufgrund der radialen Erstreckung dieser Laschen 32 über den Kopfradius R_{K} hinaus sind diese Laschen 32 nach Installation des Elements 30' auf dem Schaft 14 oder nach separater Zufuhr zum Setzgerät (siehe unten) von einem Werkzeug oder einem Niederhalter während des Fügevorgangs angreifbar. Die Laschen 32 übertragen die durch das Werkzeug bzw. den Niederhalter aufgebrachte Druckkraft auf den radial inneren Ring 34, sodass der Fügebereich unterhalb des Kopfes 12 während eines Fügevorgangs komprimiert wird.

Gemäß der in Fig. 4 gezeigten bevorzugten Ausführungsform des vorgelochten flächigen Elements 30 weist dieses die Form einer Scheibe mit einer zentralen Öffnung 36 auf. Ein Außenradius R_{A} der Scheibe 30 ist größer als der oben beschriebene Kopfradius R_{K}. Auf diese Weise ist sichergestellt, dass sich die Scheibe 30 radial umlaufend über den Kopf 12 des Stanzniets 10 hinaus erstreckt. Die bevorzugte zentrale Öffnung 36 des vorgelochten flächigen Elements 30; 30' ist so groß ausgebildet, dass das vorgelochte flächige Element 30, 30' auf dem Schaft 14 des Stanzniets 10 anordenbar ist. Das vorgelochte Element 30; 30' wird unverlierbar auf dem Schaft 14 angeordnet. Dies erfolgt durch eine reibschlüssige Verbindung zwischen vorgelochtem flächigen Element 30; '30' und Schaft 14 oder durch ein formschlüssiges Halten des vorgelochten flächigen Elements 30; 30' zwischen Kopf 12 und einem aufgeweiteten Ende des Schafts 14.

Gemäß einer weiteren bevorzugten Ausführungsform des vorgelochten flächigen Elements 30; 30' ist die zentrale Öffnung 36 in ihrem Verlauf in Dickenrichtung des vorgelochten flächigen Elements 30; 30' an die Form des Kopfes 12 des Stanzniets 10 angepasst. Daher ist die Öffnung 36 vorzugsweise angefast, um einen Senkkopf 12 aufzunehmen oder sie ist gerade ausgebildet, um sich an einen Flachrundkopf anzupassen.

Gemäß einer bevorzugten Ausführungsform vorliegender Erfindung wird der Schaft 12 des Stanzniets 10 nach Anordnen des vorgelochten flächigen Elements 30; 30' auf dem Schaft 12 aufgeweitet, um das vorgelochte flächige Element 30; 30' auf dem Schaft 12 unverlierbar zu befestigen. Durch Aufweiten gerade des kopfabgewandten Endes 16 des Schafts 14 ist das vorgelochte flächige Element 30; 30' zwischen dem Kopf 12 und dem kopfabgewandten Ende 16 des Stanzniets 10 unverlierbar gehalten.

In einer weiteren Ausgestaltung wird das vorgelochte flächige Element 30; 30' durch das radiale Aufweiten des Schafts 14, vorzugsweise durch ein Verstemmen oder das Stauchen des Schafts, auf dem Schaft 14 lösbar befestigt. Das Verstemmen oder Stauchen des Schafts 14 des Halbhohlstanzniets 10 erzeugt vorzugsweise eine Durchmesservergrößerung des Schafts 14 ober- und unterhalb des auf dem Schaft 14 angeordneten vorgelochten flächigen Elements 30; 30', wodurch dieses nicht verlierbar befestigt ist. Aufgrund dieser Aufweitung und der damit verbundenen Durchmesservergrößerung ober- und unterhalb des vorgelochten flächigen Elements 30; 30' wird im axialen Verlauf des Schafts 14 zudem eine Vertiefung in radialer Richtung erzeugt, in die das Material der zu fügenden Bauteile A, B während des Fügevorgangs hineinfließen kann. Auf diese Weise wird am Schaft 14 durch das hinein fließende Material der Bauteile A und/oder B ein Hinterschnitt gebildet, der die Festigkeit der Verbindung zwischen den Bauteilen A und B unterstützt.

Gemäß einer weiteren Ausführungsform erzeugt das Verstemmen oder das Stauchen des Schafts 14 eine Verdickung des Schafts 14, sodass das vorgelochte Element zwischen Kopf 12 und Verdickung (nicht gezeigt) formschlüssig, vorzugsweise auf dem Schaft bewegbar, gehalten ist.

Es ist des Weiteren bevorzugt, das vorgelochte flächige Element 30 durch eine beliebige Reibschlussverbindung oder durch eine Stoffschlussverbindung, wie beispielsweise Kleben, auf dem Schaft 14 zu befestigen. Zur Herstellung der Reibschlussverbindung zwischen Schaft 14 und dem vorgelochten flächigen Element 30; 30' wird der Radius der Öffnung 36 im Vergleich zum Schaftradius mit einem Untermaß gefertigt, sodass der Radius der Öffnung 36 kleiner ist als der Radius des Schafts 14 des Stanzniets 10. Durch Aufpressen des vorgelochten flächigen Elements 30; 30' auf den Schaft 14 wird das vorgelochte flächige Element auf dem Schaft 14 festgelegt.

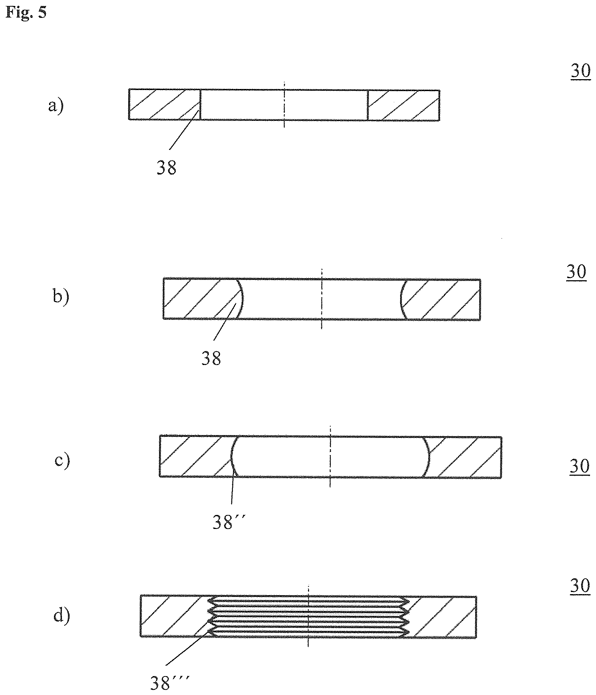

Zur Unterstützung dieser reibschlüssigen Verbindung zwischen Schaft 14 und vorgelochtem flächigem Element 30; 30' ist es bevorzugt, eine Gestaltung der radialen Innenseite 38, 38', 38", 38'" der Öffnung 36 vorzusehen. In den Figuren 5a-5d sind unterschiedliche bevorzugte Alternativen der Ausgestaltung der radialen Innenseite 38 der Öffnung 36 dargestellt. Gemäß Fig. 5a verläuft die radiale Innenseite 38 parallel zur Außenfläche des Schafts 14.

Gemäß Fig. 5b ist die radiale Innenseite 38' konvex ausgebildet. Gemäß Fig. 5c ist die radiale Innenseite 38" konkav geformt. Gemäß Fig. 5d weist die radiale Innenseite 38'" der Öffnung 36 eine Oberflächenprofilierung auf, die eine Reibschlussverbindung mit der Oberfläche des Schafts 14 herstellt. Die in den Fig. 5a-5d beispielgebend gezeigten Ausführungsformen der Oberflächengestaltung der Innseite 38 der Öffnung 36 können in Kombination mit einer Ausgestaltung der Öffnung 36 mit Untermaß im Vergleich zum Durchmesser des Schafts 14 und durch ein Aufpressen des vorgelochten flächigen Elements 30; 30' auf dem Schaft 14 befestigt werden. Es ist ebenfalls bevorzugt, den Radius der Öffnung 36 größer auszugestalten als den Radius des Schafts 14. Zur Befestigung des vorgelochten flächigen Elements 30; 30' wird dieses auf den Schaft 14 aufgesteckt und nachfolgend der Schaft 14 des Stanzniets 10 aufgeweitet, um das vorgelochte flächige Element 30; 30' zu befestigen.

Gemäß einer weiteren bevorzugten Ausführungsform ist das vorgelochte flächige Element 30 fest auf dem Schaft 14 angeordnet, sodass das kopfabgewandte Ende 16 des Schafts 14 weniger als 2/10 einer Gesamtlänge des Stanzniets 10 von einer ihm zugewandten Seite des vorgelochten flächigen Elements 30; 30' vorsteht. Eine derartige Anordnung unterstützt das Fügeverfahren (siehe unten) und das Positionieren des Niets auf den zu verbindenden Bauteilen.

Bezugnehmend auf den oben beschriebenen Stanzniet 10 mit vorgelochtem flächigem Element 30, vorzugsweise mit einer Scheibe 30, lässt sich seine Herstellung folgendermaßen zusammenfassen. Zunächst erfolgt gemäß bekannter Herstellungsverfahren ein Bereitstellen des Stanzniets 10 sowie des vorgelochten flächigen Elements 30. Vorzugsweise wird der Stanzniet 10 mit dem für die geplante Verbindung passenden Kopf 12 hergestellt. Dies ist ein Senkkopf, ein Flachkopf oder ein Halbrundflachkopf. Beispielgebend zeigen die Figuren 1 und 2 die Verwendung eines Flachkopfs 12. Derartige Stanzniete 10, vorzugsweise ein Halbhohlstanzniet, werden beispielsweise mittels Kaltschlagen oder anderen gängigen Verfahren hergestellt. (Schritt a)

Das vorgelochte flächige Element 30 weist die bereits oben beschriebene Öffnung 36 auf. Beispielsweise ist bei der Scheibe 30 gemäß Fig. 4 die Öffnung 36 mittig angeordnet und an den Durchmesser des Schafts 14 des Halbhohlstanzniets 10 angepasst. Das vorgelochte flächige Element 30 wird nun auf dem Schaft 14 des Stanzniets 10 derart angeordnet, dass sich der Schaft 14 durch die Öffnung 36 des vorgelochten flächigen Elements 30, vorzugsweise der Scheibe gemäß Fig. 4, erstreckt. Aufgrund der radialen Abmessungen des vorgelochten flächigen Elements 30 erstrecken sich ausgewählte Teile bzw. Bereiche des vorgelochten flächigen Elements 30 über den Kopfradius R_{K} des Kopfs 12 des Stanzniets 10 hinaus. (Schritt b)

Gemäß einer bevorzugten Ausführungsform des vorliegenden Herstellungsverfahrens wird das vorgelochte flächige Element 30 auf dem Schaft 14 befestigt. Dies erfolgt vorzugsweise durch Aufweiten des Schafts 14 des Stanzniets 10. Es ist ebenfalls bevorzugt, die Öffnung 36 des vorgelochten flächigen Elements 30 mit einem Untermaß bezogen auf den Außendurchmesser des Schafts 14 bereitzustellen, sodass das vorgelochte flächige Element 30 mit gleichzeitiger Erzeugung einer reibschlüssigen Verbindung auf den Schaft 14 aufgepresst werden kann. Es ist ebenfalls bevorzugt, das vorgelochte flächige Element 30 durch Stoffschluss, vorzugsweise durch Kleben, auf dem Schaft 14 zu befestigen. (Schritt c)

Es ist weiterhin bevorzugt, das vorgelochte flächige Element 30 zwar fest aber dennoch lösbar auf dem Schaft 14 anzuordnen. Die zunächst feste Anordnung des vorgelochten flächigen Elements 30 auf dem Schaft 14 sorgt für eine vereinfachte Zufuhr des Stanzniets 10 zum Setzgerät bzw. zur Fügestelle sowie für ein einfaches Positionieren des Stanzniets 10 an der Fügestelle. Des Weiteren wird ein Fixieren des Stanzniets über das vorgelochte flächige Element 30 an der Fügestelle mithilfe der Klemmkraft eines Werkzeugs bzw. eines Niederhalters ebenfalls erleichtert, wenn das vorgelochte flächige Element 30 auf dem Schaft 14 befestigt ist. Wenn dann ein Stempel den Stanzniet 10 in die miteinander zu verbindenden Bauteile setzt, löst sich die Verbindung zwischen Schaft 14 und vorgelochtem flächigen Element 30 und der Kopf 12 des Stanzniets bewegt sich in Richtung des vorgelochten flächigen Elements 30, bis er an diesem anliegt. (Schritt d)

Gemäß einer weiteren bevorzugten Ausführungsform wird das vorgelochte flächige Element 30; 30' auf dem Schaft 14 unverlierbar und bewegbar angeordnet (siehe oben).

Durch das erfindungsgemäße Herstellungsverfahren wird das vorgelochte flächige Element unverlierbar zwischen dem Kopf und dem kopfabgewandten Ende des Schaftes des Stanznietes angeordnet.

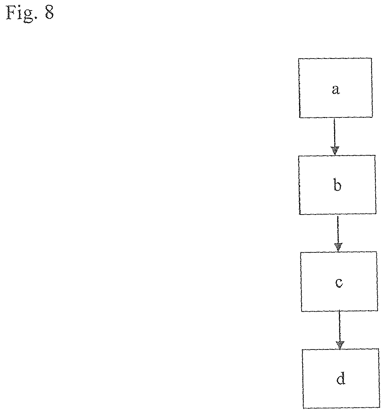

Eine Zusammenfassung der bevorzugten Ausführungsform des oben beschriebenen Herstellungsverfahrens zeigt Fig. 8 in Form eines Flussdiagramms.

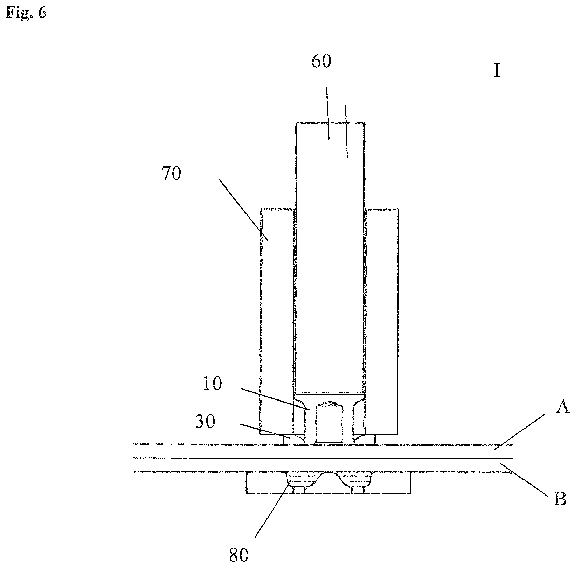

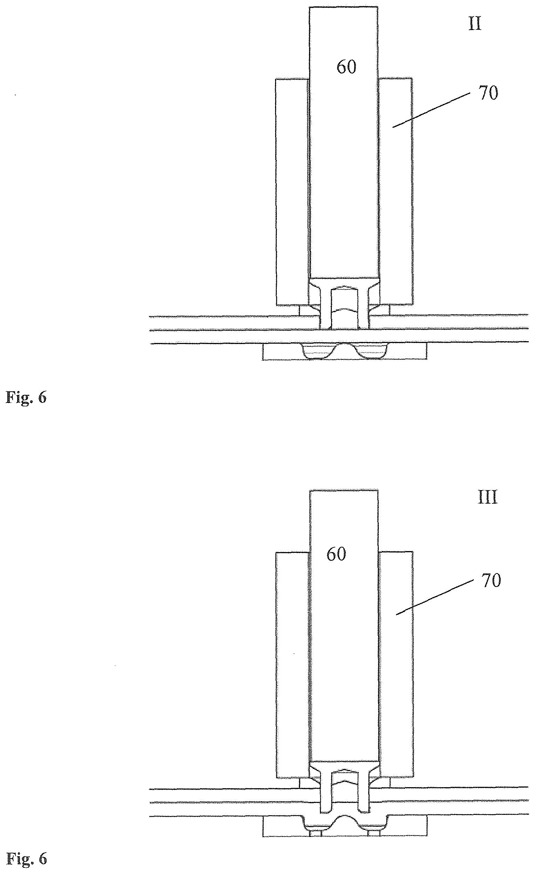

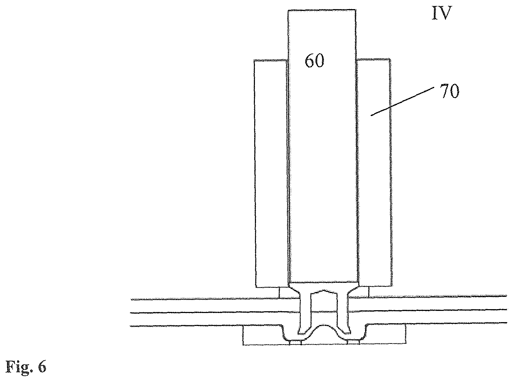

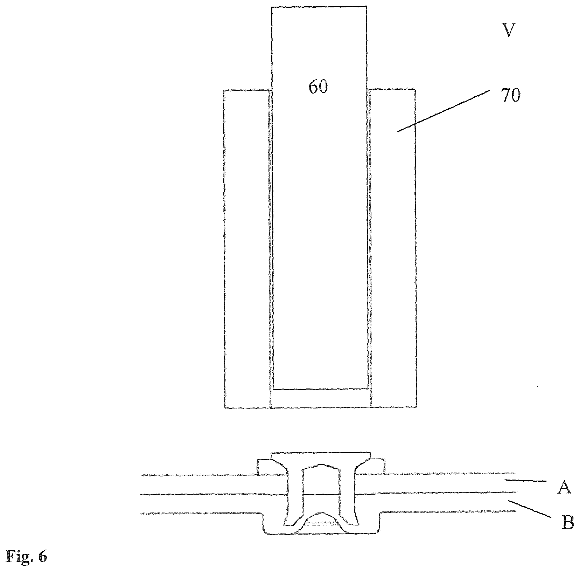

Fig. 6 zeigt eine bevorzugte Ausführungsform eines Fügeverfahrens vorliegender Erfindung. Demnach wird der Stanzniet 10 mit seinem vorgelochten flächigen Element 30 in die beiden Bauteile A, B gesetzt. Es ist ebenfalls bevorzugt, mehr als zwei Bauteile miteinander zu verbinden.

Vor dem Setzen des Stanzniets 10 werden die mindestens zwei Bauteile A, B auf einer Matrize 80 angeordnet. Die Matrize 80 liefert die Gegenkraft zur Kraft eines Stempels 60 beim Setzen des Stanzniets 10 in die Bauteile A, B. Zudem bildet die Matrize 80 einen Matrizenhohlraum, in dem verdrängtes Material des matrizenseitigen Bauteils B aufgenommen wird. Auf diese Weise wird ein Schließkopf der Fügeverbindung ausgebildet.

Vorzugsweise besteht das matrizenseitige Bauteil B aus dem duktilen Material, wie beispielsweise Metall. In diesem Zusammenhang wird gemäß einer Ausführungsform vorliegender Erfindung Aluminium eingesetzt.

Das Bauteil A besteht vorzugsweise aus Kunststoff und weiter bevorzugt aus einem faserverstärkten Kunststoff. Gemäß einer weiteren Ausführungsform vorliegender Erfindung umfasst der hier verwendete faserverstärkte Kunststoff des Bauteils A eine duromere Matrix oder ein anderes Matrixmaterial entsprechend der Materialanforderung des Bauteils A auf. In Abhängigkeit von den Werkstoffen der zu verbindenden Bauteile A, B werden die Nietfußgeometrie sowie die Länge des Schafts 14 des Stanzniets 10 angepasst, um das Aufspreizverhalten des Stanzniets 10 einstellen zu können.

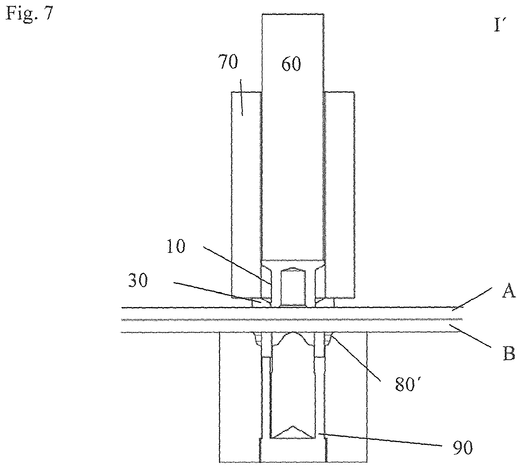

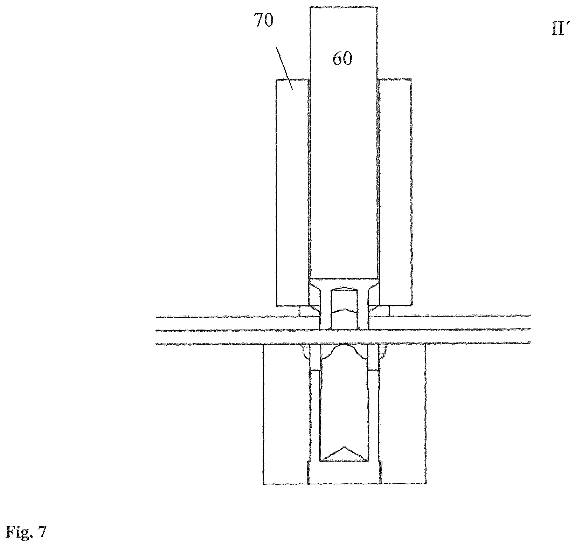

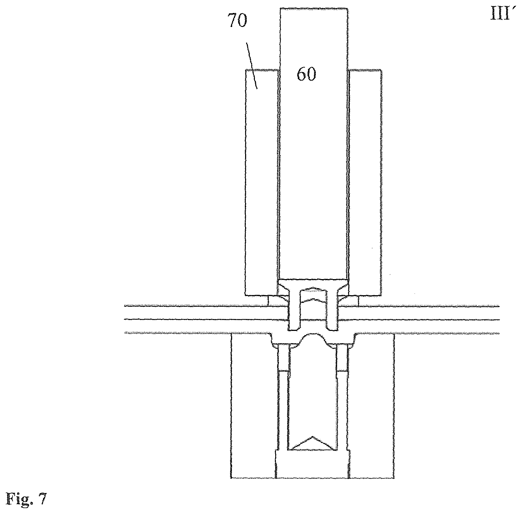

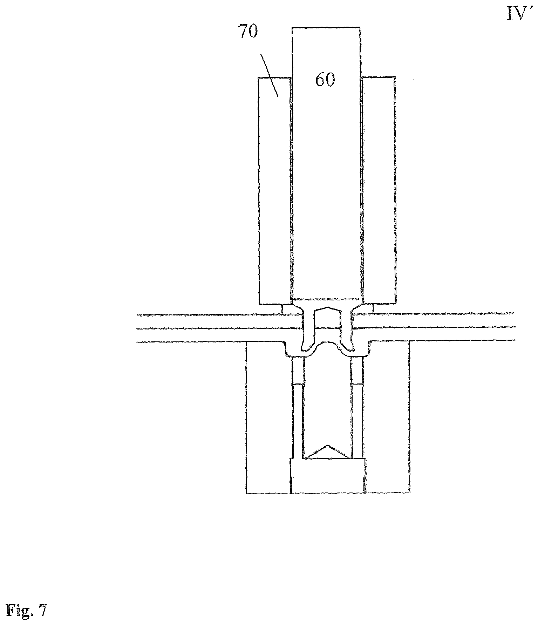

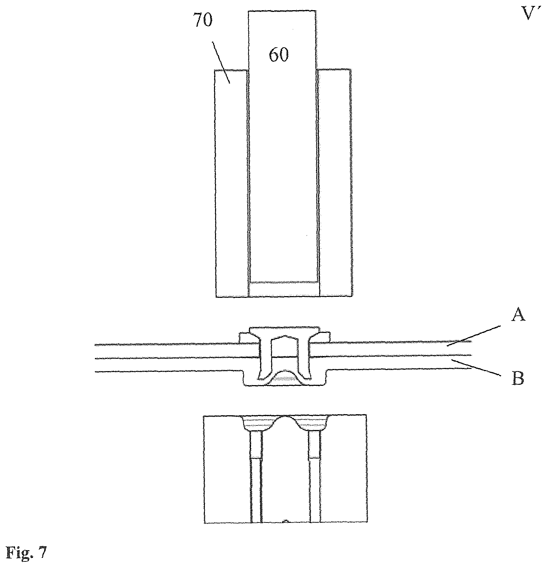

Zunächst wird im Schritt I (vgl. Fig. 7) der Stanzniet 10 mit seinem vorgelochten flächigen Element 30 vorzugsweise über einen in seiner inneren Form an den Stanzniet 10 mit vorgelochtem flächigem Element 30 angepassten Formschlauch, beispielsweise einen T-förmigen Schlauch, oder über ein Gurtband einer Fügestelle zugeführt. Die mindestens zwei Bauteile A, B stützen sich auf der Matrize 80 ab. Alternative dazu werden in Schritt I der selbstlochende Stanzniet sowie das vorgelochte flächige Element getrennt voneinander zugeführt.

Gemäß einer Ausführungsform der Erfindung wird das vorgelochte flächige Element 30; 30' vor Erreichen der Fügestelle auf dem Schaft 12 des Stanzniets 10 angeordnet.

Gegenüber der Matrize 80 ist ein Stempel 60 verfahrbar angeordnet. Ein Werkzeug, vorzugsweise ein Niederhalter 70, umgibt in radialer Richtung den Stempel 60 und ist in gleicher Weise unabhängig vom Stempel 60 in Richtung der Bauteile A, B und der Matrize 80 bewegbar. Im Schritt I wird der Niederhalter 70 in Richtung der Bauteile A, B bewegt, greift am vorgelochten flächigen Element 30 an, im Speziellen an der Scheibe 30, und drückt die Scheibe 30 gegen die Bauteile A, B. Dabei stützen sich die Bauteile A, B an der Matrize 80 ab. Auf diese Weise wird der Fügebereich unterhalb der Scheibe 30 mithilfe des Niederhalters 70 komprimiert. Dies verhindert eine Bewegung der Bauteile A, B während der Fügevorgangs. Zudem verhindert diese Kompression über Niederhalter 70 und Scheibe 30 ein Aufwärtsbewegen der Decklage aus Kunststoff oder faserverstärktem Kunststoff bzw. des Bauteils A.

Im Schritt II bewegt der Stempel 60 den Stanzniet 10 durch das Bauteil A, das vorzugsweise aus Kunststoff oder aus faserverstärktem Kunststoff besteht. Dabei wird ein Butzen aus dem Bauteil A ausgestanzt und weiter mit dem Stanzniet 10 mitgeführt.

Im Schritt III dringt der Stanzniet 10 in das zweite aus duktilem Material bestehende Bauteil B ein und verformt es in den Hohlraum der Matrize 80. Dieser Vorgang setzt sich in den Schritten III und IV fort, bis der Hohlraum der Matrize 80 gefüllt ist. Auf diese Weise bildet sich ein Schließkopf der Fügeverbindung aus. Der Stanzniet 10 mit Scheibe 30 ist vollständig gefügt, sobald der Kopf 12 des Stanzniets 10 an der Scheibe 30 anliegt.

In Abhängigkeit von der Wahl der Form des Kopfes 12 des Stanzniets und der daran angepassten Form der Scheibe 30 bzw. des vorgelochten flächigen Elements 30 kann eine Spaltfreiheit zwischen den Bauteilen A und B gesteuert werden. Die Form des Kopfes 12 und der Scheibe 30 wirkt sich gerade dann aus, wenn das Bauteil A aus faserverstärktem Kunststoff und das Bauteil B aus Metall bestehen. Nutzt man beispielsweise einen Flachrundkopf des Stanzniets 10 in Kombination mit einem planausgebildeten vorgelochten flächigen Element 30, wird eine Einprägung bzw. ein Eindrücken des Kopfes 12 des Stanzniets 10 in das Bauteil A vermieden. Dies ist gerade für faserverstärkte Werkstoffe mit duromerer Matrix als Bauteil A von Vorteil, da eine Biegebelastung auf den faserverstärkten Kunststoff des Bauteils A vermieden wird. Nutzt man einen Flachkopf mit Senkkopfradius oder einen Senckopf-Stanzniet, wird vorzugsweise ein potenzieller Spalt zwischen dem Bauteil A aus faserverstärktem Kunststoff und dem Bauteil B während des Fügevorgangs geschlossen. Dies ist besonders für Bauteile A aus faserverstärktem Kunststoff mit thermoplastischer Matrix von Vorteil, da eine vorgespannte geschlossene Fügeverbindung erzeugt wird.

Abschließend werden im Schritt IV der Stempel 60 und der Niederhalter 70 von der Fügestelle entfernt, sodass die hergestellte Fügeverbindung freigegeben wird. Das oben beschriebene Verfahren ist auch zusammenfassend im Flussdiagram in Fig. 8 dargestellt.

Fig. 7 zeigt eine abgewandelte bevorzugte Ausführungsform des Fügeverfahrens gemäß Fig. 6. Dabei sind die Bewegungen von Stempel 60 und Niederhalter 70 in den Schritten I'-V' identisch zu den Schritten I-V gemäß Fig. 6, wie sie oben beschrieben sind.

Die Matrize 80' weist aber eine andere Funktionalität auf. Innerhalb des Hohlraums der Matrize 80' ist vorzugsweise ein bewegbares Stützelement 90 angeordnet. Das Stützelement 90 wirkt einer Verformung des duktilen Bauteils B entgegen, sodass dadurch eine Verformung des Bauteils B in den Hohlraum der Matrize 80' steuerbar oder regelbar ist. Allgemein kann dadurch bevorzugt die Verformung in den Hohlraum der Matrize 80' verzögert werden.

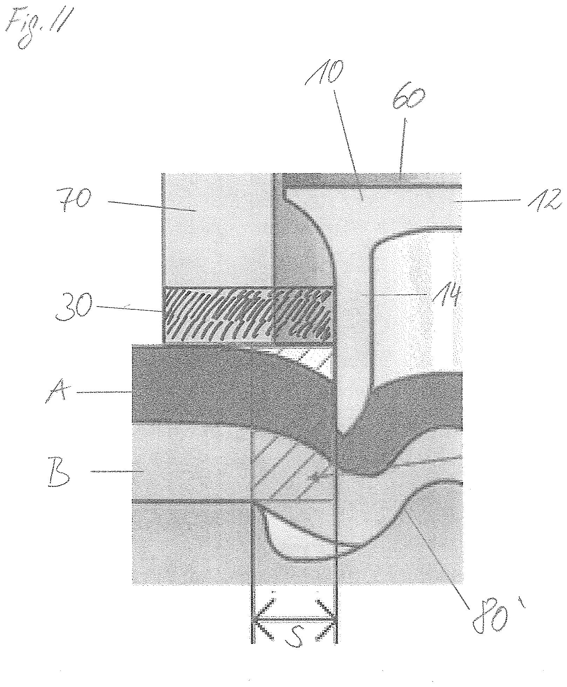

Das Stützelement 90 ist vorzugweise derart angeordnet, dass ein Schneidspalt S reduziert wird. Beispielgebend ist der Schneidspalt S in Fig. 11 veranschaulicht. Der Schneidspalt S bezeichnet den Abstand zwischen der radialen Außenseite des Schafts 14 und der radialen Außenkante der Matrize 80'. Der Schneidspalt S begünstigt nachteilige Biegemomente in den miteinander zu verbindenden Bauteilen A, B sodass seine gezielte Verkleinerung mittels Stützelement 90 vorteilhaft ist.

Durch die Bewegung des Stempels 60 wird der Stanzniet 10 in Richtung der Matrize 80' bewegt. Dabei verformt sich das Bauteil B und es entsteht ein nachteiliges Verformungsmoment zwischen der radialen Außenseite der Matrize 80' und der radialen Außenseite des Schafts 14. Das Stützelement 90 ist nun bevorzugt derart angeordnet, dass es das Bauteil B innerhalb des Hohlraums der Matrize 80' im Bereich zwischen der radialen Außenseite des Schafts 14 und der radialen Innenseite der Matrize 80' abstützt. Durch eine Reduktion des Schneidspalts S erfolgt ein sauberer Schnitt des Stanzniets 10 durch das Bauteil A, während das Stützteil 90 das Bauteil B abstützt (Schritt II').

Um die Ausbildung des Schließkopfes und das Fließen des Materials von Bauteil B in den Hohlraum der Matrize 80' nicht zu behindern und/oder kontrolliert zu beeinflussen, bewegt sich das Stützteil in Abhängigkeit von der Bewegung des Stempels 60 in den Schritten III' und IV' und/oder in Abhängigkeit vom Einfließen des Materials von Bauteil B in den Hohlraum der Matrize vom Bauteil B weg.

Zur konstruktiven Umsetzung der definierten Freigabe des Hohlraums der Matrize 80' durch das Stützelement 90 ist das Stützelement 90 gemäß unterschiedlicher Ausführungsformen realisiert. Gemäß der schematisch in Fig. 7 angedeuteten Ausführungsform ist das Stützelement 90 rohrförmig ausgebildet und linear in Fügerichtung des Stempels 60 bewegbar angeordnet. Das Stützelement 90 ragt entgegen der Fügerichtung in den Hohlraum der Matrize 80' hinein. Durch Bewegung in Fügerichtung gibt das Stützelement 90 den Hohlraum der Matrize 80' frei.

Die Freigabe des Hohlraums der Matrize 80' durch das Stützelement 90 erfolgt bevorzugt gesteuert oder geregelt. Beispielsweise gibt das Stützelement 90 in Abhängigkeit vom Verformungsverhalten der zu verbindenden Bauteile A, B die Matrize 80' frei. Gemäß einer weiteren Ausführungsform erzeugt das Stützelement 90 und somit die Matrize 80' eine definierte Gegenkraft in Richtung der sich in den Hohlraum der Matrize 80' verformenden Bauteile A, B. Diese Gegenkraft wird beispielsweise gemäß einem vorgegebenen Kraftprofil verändert, sodass das Stützelement 90 gegenkraftabhängig verfährt. Auf diese Weise ist die Matrize 80' mit Stützelement 90 an die verschiedensten Werkstoffe und ihr Verformungsverhalten anpassbar.

Neben der gesteuerten oder geregelten Bewegung des Stützelements 90 zumindest teilweise in den Hohlraum der Matrize 80' hinein und aus diesem heraus, sind unterschiedliche Konstruktionen des Stützelements 9 bevorzugt, die diese Bewegung unterstützen. Es ist beispielsweise bevorzugt, basierend auf einer bestimmten Konstruktion des Stützelements 90 dieses parallel (siehe oben), quer oder schräg zur Fügerichtung des Stempels 60 zu bewegen, um den Hohlraum der Matrize 80' freizugeben und/oder die Größe des Schneidspalts zu verändern. Alternativ dazu sind auch Kombinationen dieser Bewegungen bevorzugt.

Gemäß weiterer Vorrichtungs- und Verfahrensalternativen erfolgt die Bewegung des Stützelements 90 aus dem Hohlraum der Matrize 80' gegen eine konstante oder kontrolliert veränderbare Federkraft. Diese Federkraft wird vorzugsweise mechanisch, hydraulisch oder elektromechanisch aufgebracht. Es ist ebenfalls bevorzugt, das Stützelement 90 zur Freigabe des Hohlraums der Matrize 80' zu entriegeln oder kraftfrei zu machen, sodass es durch das in den Hohlraum der Matrize 80' verdrängte Material oder Bauteile A, B versetzbar ist.

Im Schritt V' werden der Stempel 60, der Niederhalter 70 und das Stützelement 90 von der Fügestelle entfernt.

Somit wird der Stanzniet 10 mit vorgelochtem flächigen Element 30 vorzugsweise mit einem Setzgerät bekannter Bauart in Kombination mit der Matrize 80' mit bewegbarem Stützelement 90 gesetzt. Derartige Setzgeräte umfassen einen Stempel 60 und einen Niederhalter 70, die hydraulisch, elektromechanisch oder über andere Antriebsprinzipien bewegbar sind.

### Bezugszeichenliste

- 2: Schließkopf
- 10: Stanzniet
- 12: Kopf
- 14: Schaft
- 16: Kopfabgewandtes Ende des Schafts 14
- 30, 30': Vorgelochtes flächiges Element, Scheibe
- 32: Lasche
- 34: Ring
- 36: Öffnung
- 38, 38', 38", 38"': Innenseite der Öffnung 36
- 60: Stempel
- 70: Niederhalter
- 80, 80': Matrize
- 90: Stützelement
- A, B: Bauteil
- S: Schneidspalt
- R_{K}: Kopfradius
- R_{A}: Außenradius

## Patentansprüche

1. Ein Stanzniet (10), insbesondere ein selbstlochender Stanzniet (10), der die folgenden Merkmale aufweist:
einen Kopf (12) und einen Schaft (14) sowie
ein vorgelochtes flächiges Element (30; 30'), das auf dem Schaft (14) angeordnet ist und sich radial bezogen auf den Kopf (12) zumindest teilweise über einen Kopfradius (R_{K}) hinaus erstreckt, **dadurch gekennzeichnet, dass**
das vorgelochte flächige Element (30; 30') vor einem Fügen des Stanzniets (10) auf dem Schaft (14) zwischen dem Kopf (12) und einem kopfabgewandten Ende des Schafts (14) unverlierbar angeordnet ist.

2. Stanzniet (10) gemäß Anspruch 1, bei dem das vorgelochte flächige Element (30; 30') in einem Bereich des kopfabgewandten Endes des Schafts (14) an dem Schaft (14) befestigt ist.

3. Stanzniet (10) gemäß Anspruch 2, bei dem das kopfabgewandte Ende des Schafts (14) weniger als 2/10 einer Gesamtlänge des Schafts (14) von einer ihm zugewandten Seite des vorgelochten flächigen Elements (30; 30') vorsteht.

4. Stanzniet (10) gemäß einem der vorhergehenden Ansprüche, bei dem ein Endradius des kopfabgewandten Endes des Schafts (14) größer ist als ein Schaftradius des Schafts (14) zwischen dem Kopf (12) und dem kopfabgewandten Ende des Schafts (14).

5. Stanzniet (10) gemäß einem der vorhergehenden Ansprüche, bei dem das vorgelochte flächige Element (30; 30') eine runde oder polygonale oder ovale oder hantelförmige Scheibe mit zentraler Öffnung (36) ist, durch die sich der Schaft (14) des Stanzniets (10) erstreckt und die sich radial soweit über den Kopfradius (R_{K}) hinaus erstreckt, dass die Scheibe durch ein Werkzeug, insbesondere ein Niederhalter (70), angreifbar ist.

6. Herstellungsverfahren für einen Stanzniet (10), insbesondere ein selbstlochender Stanzniet (10), das die folgenden Schritte aufweist:
Bereitstellen eines Stanzniets (10) und eines vorgelochten flächigen Elements (30; 30') und
Anordnen des vorgelochten flächigen Elements (30; 30') auf einem Schaft (14) des Stanzniets (10) derart, dass sich das vorgelochte flächige Element (30; 30') bezogen auf einen Kopf (12) des Stanzniets (10) radial zumindest teilweise über einen Kopfradius (R_{K}) hinaus erstreckt und auf dem Schaft (14) zwischen dem Kopf (12) und einem kopfabgewandten Ende des Schafts (14) unverlierbar angeordnet ist.

7. Herstellungsverfahren nach Anspruch 6, wobei das vorgelochte flächige Element (30; 30') eine runde oder polygonale Scheibe mit zentraler Öffnung (36) ist.

8. Herstellungsverfahren nach Anspruch 6, mit dem weiteren Schritt:
Aufweiten oder Stauchen eines Schafts (14) des Stanzniets (10) derart, dass das vorgelochte flächige Element (30; 30') angrenzend an ein kopfabgewandtes Ende des Stanzniets (10) reibschlüssig oder formschlüssig befestigt ist.

9. Fügeverfahren für einen Stanzniet (10), insbesondere einen selbstlochenden Stanzniet (10), mit einem vorgelochten flächigen Element (30; 30'), das sich radial bezogen auf einen Kopf (12) des Stanzniets (10) zumindest teilweise über einen Kopfradius (R_{K}) hinaus erstreckt und auf dem Schaft (14) zwischen dem Kopf (12) und einem kopfabgewandten Ende des Schafts (14) unverlierbar angeordnet ist, das die folgenden Schritte aufweist:
Anordnen mindestens eines ersten Bauteils (A) über einem zweiten Bauteil (B),
Zuführen des Stanzniets (10) mit vorgelochtem flächigem Element (30; 30') unverlierbar angeordnet auf dem Schaft (14) des Stanzniets (10) zu einer Fügestelle,
Andrücken des vorgelochten flächigen Elements (30; 30') an das erste Bauteil (A) mit Hilfe eines Werkzeugs, insbesondere eines Niederhalters (70), wobei eine dem vorgelochten flächigen Element (30; 30') gegenüberliegend angeordnete Matrize (80; 80') eine ausreichende oder eine veränderbare Gegenkraft aufbringt, und
Setzen des Stanzniets (10) mit Hilfe eines Setzwerkzeugs in das mindestens erste (A) und zweite Bauteil (B), wobei das vorgelochte flächige Element (30; 30') den Schaft (14) des Stanzniets (10) umgibt.

10. Fügeverfahren gemäß Anspruch 9, in dem das erste Bauteil (A) aus Kunststoff und das zweite Bauteil (B) aus Metall besteht.

11. Fügeverfahren gemäß Anspruch 9, in dem das erste Bauteil (A) aus einem weichen und/oder spröden Werkstoff besteht und das zweite Bauteil (B) aus Metall.

12. Fügeverfahren gemäß einem der Ansprüche 9 bis 11, bei dem eine Matrize (80') mit einem bewegbaren Stützelement (90) eingesetzt wird und das den weiteren Schritt umfasst:
Stützen der zu verbindenden Bauteile (A, B) innerhalb eines Hohlraums der Matrize (80') während des Fügevorgangs und
Bewegen des Stützelements (90) zumindest teilweise aus dem Hohlraum der Matrize (80') heraus während des Fügevorgangs, um den Hohlraum der Matrize (80') gezielt für verdrängtes Material der zu verbindenden Bauteile (A, B) freizugeben.

13. Mindestens ein erstes (A) und ein zweites Bauteil (B), die mit einem Stanzniet (10) gemäß Anspruch 1 miteinander verbunden sind.

## Claims

1. A rivet (10), especially a self-piercing rivet (10), comprising the following features:
a head (12) and a shank (14) as well as
a pre-punched two-dimensional element (30; 30') which is arranged on the shank (14) and which protrudes radially at least partly beyond a head radius (R_{K}) with respect to the head (12), **characterized in that**
the pre-punched two-dimensional element (30, 30') is arranged captively on the shank (14) between the head (12) and an end of the shank (14) facing away from the head before the rivet (10) is joint.

2. Rivet (10) according to claim 1, in which the pre-punched two-dimensional element (30; 30') is fastened on the shank (14) in a portion of the shank (14) facing away from the head.

3. Rivet (10) according to claim 2, in which the end of the shank (14) facing away from the head protrudes less than 2/10 of an overall length of the shank (14) from a side of the pre-punched two-dimensional element (30; 30') facing it.

4. Rivet (10) according to one of the preceding claims, in which an end radius of the end of the shank (14) facing away from the head is larger than a shank radius of the shank (14) between the head (12) and the end of the shank (14) facing away from the head.

5. Rivet (10) according to one of the preceding claims, in which the pre-punched two-dimensional element (30; 30') is a circular or a polygonal or an oval or a dumbbell-shaped disc with a central opening (36), through which the shank (14) of the rivet (10) extends and which protrudes radially beyond the head radius (R_{K}) to such an extent that the disc may be abutted by a tool, especially a hold-down device (70).

6. Production method for a rivet (10), especially a self-piercing rivet (10), comprising the following steps:
providing a rivet (10) and a pre-punched two-dimensional element (30; 30') and
arranging the pre-punched two-dimensional element (30; 30') on a shank (14) of the rivet (10) so that the pre-punched two-dimensional element (30; 30') radially protrudes, with respect to a head (12) of the rivet (10), at least partly beyond a head radius (R_{K}) and is arranged captively on the shank (14) between the head (12) and an end of the shank (14) facing away from the head.

7. Production method according to claim 6, wherein the pre-punched two-dimensional element (30; 30') is a circular or a polygonal disc having a central opening (36).

8. Production method according to claim 6, comprising the further step:
widening or compressing a shank (14) of the rivet (10) so that the pre-punched two-dimensional element (30; 30') is fixed adjacent to an end of the rivet (10) facing away from the head by frictional-fit or by form-fit.

9. Joining method for a rivet (10), especially a self-piercing rivet (10) having a pre-punched two-dimensional element (30; 30'), which radially protrudes, with respect to a head (12) of the rivet (10), at least partly beyond a head radius (R_{K}) and which is captively fastened on the shank (14) between the head (12) and an end of the shank (14) facing away from the head, which comprises the following steps:
arranging at least a first component (A) above a second component (B),
supplying the rivet (10) having a pre-punched two-dimensional element (30; 30') arranged captively on the shank (14) of the rivet (10) to a joining location,
pressing the pre-punched two-dimensional element (30; 30') on the first component (A) by means of a tool, especially a hold-down device (70), wherein a die (80; 80') arranged oppositely to the pre-punched two-dimensional element (30; 30') applies a sufficient or a variable counterforce, and
setting the rivet (10) by means of a setting tool into the at least first (A) and second component (B), wherein the pre-punched two-dimensional element (30; 30') surrounds the shank (14) of the rivet (10).

10. Joining method according to claim 9, in which the first component (A) is made of plastic and the second component (B) is made of metal.

11. Joining method according to claim 9, wherein the first component (A) is made of a soft and/or brittle material and the second component (B) is made of metal.

12. Joining method according to one of the claims 9 to 11, in which a die (80') having a movable supporting element (90) is used and which comprises the further step:
supporting the components (A, B) to be connected within a cavity of the die (80') during the joining process and
moving the supporting element (90) at least partly out of the cavity of the die (80') during the joining process to specifically uncover the cavity of the die (80') for displaced material of the components (A, B) to be connected.

13. At least a first (A) and a second component (B) connected to each other by means of a rivet (10) according to claim 1.

## Revendications

1. Un rivet autopoinçonneur (10), en particulier un rivet autoperforant (10), qui présente les caractéristiques suivantes :
une tête (12) et une tige (14) ainsi
qu'un élément plat préperforé (30 ; 30'), qui est disposé sur la tige (14) et qui s'étend radialement par rapport à la tête (12) au moins en partie au-delà d'un rayon de la tête (R_{K}), **caractérisé en ce que**
l'élément plat préperforé (30 ; 30') est disposé de manière imperdable sur la tige (14) entre la tête (12) et une extrémité de la tige (14) opposée à la tête avant un assemblage du rivet autopoinçonneur (10).

2. Rivet autopoinçonneur (10) selon la revendication 1, dans lequel l'élément plat préperforé (30 ; 30') est fixé à la tige (14) dans une zone de l'extrémité de la tige (14) opposée à la tête.

3. Rivet autopoinçonneur (10) selon la revendication 2, dans lequel l'extrémité de la tige (14) opposée à la tête dépasse d'un côté lui faisant face de l'élément plat préperforé (30 ; 30') de moins de 2/10^{ème} d'une longueur totale de la tige (14).

4. Rivet autopoinçonneur (10) selon l'une des revendications précédentes, dans lequel un rayon d'extrémité de l'extrémité de la tige (14) opposée à la tête est plus grand qu'un rayon de tige de la tige (14) entre la tête (12) et l'extrémité de la tige (14) opposée à la tête.

5. Rivet autopoinçonneur (10) selon l'une des revendications précédentes, dans lequel l'élément plat préperforé (30 ; 30') est une rondelle ronde ou polygonale ou ovale ou en forme d'haltère, dotée d'une ouverture centrale (36), à travers laquelle passe la tige (14) du rivet autopoinçonneur (10) et qui s'étend radialement à tel point au-delà du rayon de la tête (R_{K}) que la rondelle peut être saisie par un outil, en particulier un serre-flan (70).

6. Procédé de fabrication d'un rivet autopoinçonneur (10), en particulier d'un rivet autoperforant (10), qui présente les étapes suivantes :
la mise en place d'un rivet autopoinçonneur (10) et d'un élément plat préperforé (30 ; 30') et
la disposition de l'élément plat préperforé (30 ; 30') sur une tige (14) du rivet autopoinçonneur (10), de sorte que l'élément plat préperforé (30 ; 30') s'étend radialement par rapport à une tête (12) du rivet autopoinçonneur (10) au moins en partie au-delà d'un rayon de la tête (R_{K}) et est disposé de manière imperdable sur la tige (14) entre la tête (12) et une extrémité de la tige (14) opposée à la tête.

7. Procédé de fabrication selon la revendication 6, dans lequel l'élément plat préperforé (30 ; 30') est une rondelle ronde ou polygonale, dotée d'une ouverture centrale (36).

8. Procédé de fabrication selon la revendication 6, comprenant encore l'étape suivante :
l'évasement ou le refoulement d'une tige (14) du rivet autopoinçonneur (10), de sorte que l'élément plat préperforé (30 ; 30') est fixé par complémentarité de forme ou par friction de façon adjacente à une extrémité du rivet autopoinçonneur (10) opposée à la tête.

9. Procédé d'assemblage d'un rivet autopoinçonneur (10), en particulier d'un rivet autoperforant (10), doté d'un élément plat préperforé (30 ; 30'), qui s'étend radialement par rapport à une tête (12) du rivet autopoinçonneur (10) au moins en partie au-delà d'un rayon de la tête (R_{K}) et qui est disposé de manière imperdable sur la tige (14) entre la tête (12) et une extrémité de la tige (14) opposée à la tête, lequel procédé présente les étapes suivantes :
la disposition d'au moins un premier composant (A) au-dessus d'un second composant (B),
l'amenée du rivet autopoinçonneur (10), doté d'un élément plat préperforé (30 ; 30'), disposé de manière imperdable sur la tige (14) du rivet autopoinçonneur (10) jusqu'à un emplacement d'assemblage,
la pression de l'élément plat préperforé (30 ; 30') contre le premier composant (A) à l'aide d'un outil, en particulier un serre-flan (70), dans lequel une matrice (80 ; 80') disposée en face de l'élément plat préperforé (30 ; 30') applique une force antagoniste suffisante ou variable, et
la pose du rivet autopoinçonneur (10) à l'aide d'un outil de pose sur au moins le premier composant (A) et le second composant (B), dans lequel l'élément plat préperforé (30 ; 30') entoure la tige (14) du rivet autopoinçonneur (10).

10. Procédé d'assemblage selon la revendication 9, dans lequel le premier composant (A) est constitué de matière plastique et le second composant (B) est à base de métal.

11. Procédé d'assemblage selon la revendication 9, dans lequel le premier composant (A) est constitué d'un matériau tendre et/ou fragile et le second composant (B) est à base de métal.

12. Procédé d'assemblage selon l'une des revendications 9 à 11, dans lequel une matrice (80') est utilisée avec un élément de support mobile (90) et qui comprend encore l'étape suivante :
l'appui des composants à relier (A, B) à l'intérieur d'une cavité de la matrice (80') durant le processus d'assemblage et
le déplacement de l'élément de support (90) au moins en partie hors de la cavité de la matrice (80') durant le processus d'assemblage pour libérer la cavité de la matrice (80') de manière ciblée pour le matériau refoulé des composants à relier (A, B).

13. Au moins un premier composant (A) et un second composant (B), qui sont reliés l'un à l'autre par un rivet autopoinçonneur (10) selon la revendication 1.
